(19) **Europäisches Patentamt**
**European Patent Office**
**Office européen des brevets**

(11) **EP 2 042 845 B1**

(12) **EUROPÄISCHE PATENTSCHRIFT**

(45) Veröffentlichungstag und Bekanntmachung des Hinweises auf die Patenterteilung:
**18.05.2011   Patentblatt 2011/20**

(51) Int Cl.:
*G01K 17/20* (2006.01)     *G01K 7/02* (2006.01)

(21) Anmeldenummer: **08021894.4**

(22) Anmeldetag: **22.08.2006**

(54) **Vorrichtung und Verfahren zur Erfassung des spezifischen Wärmeflusses auf eine Membranwand zur Optimierung der Kesselauslegung und des Kesselbetriebes**

Device and method for measuring the specific heat flow on a membrane wall for optimising the boiler layout and the boiler operation

Dispositif et procédé destiné à la saisie du flux thermique spécifique sur la paroi d'une membrane afin d'optimiser la conception du chaudron et du fonctionnement du chaudron

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **24.08.2005   DE 102005040277**

(43) Veröffentlichungstag der Anmeldung:
**01.04.2009   Patentblatt 2009/14**

(62) Dokumentnummer(n) der früheren Anmeldung(en) nach Art. 76 EPÜ:
**06017393.7 / 1 760 441**

(73) Patentinhaber: **CheMin GmbH**
**86167 Augsburg (DE)**

(72) Erfinder:
• **Dr. Krüger, Jörg**
  **92421 Schwandorf (DE)**
• **Dr. Spiegel, Wolfgang**
  **86415 Mering (DE)**
• **Prof. Dr.-Ing. Beckmann, Michael**
  **01069 Dresden (DE)**
• **Dipl. Ing. Krüger, Sascha**
  **92421 Schwandorf (DE)**

(74) Vertreter: **Müller-Wolff, Thomas**
**Flaccus · Müller-Wolff**
**Patentanwälte**
**Bussardweg 10**
**50389 Wesseling (DE)**

(56) Entgegenhaltungen:
**WO-A2-2004/036116     US-A- 4 779 994**
**US-B1- 6 485 174**

•  **"INTEGRAL PLUG-TYPE HEAT-FLUX GAUGE" NTIS TECH NOTES, US DEPARTMENT OF COMMERCE. SPRINGFIELD, VA, US, Januar 1992 (1992-01), Seiten 34,1-2, XP000287850 ISSN: 0889-8464**

**Beschreibung**

In Dampferzeugern wird die Energie aus den Verbrennungsgasen im hohen Temperaturbereich im Wesentlichen durch Flamm- sowie Gasstrahlung und im abgesenkten Temperaturbereich im Wesentlichen durch Konvektion auf das Wasser bzw. den Dampf übertragen. Die Gestaltung der Wärmeübertragungsflächen trägt den physikalischen Gesetzen Rechnung. In dem hohen Temperaturbereich sind Rauchgaszüge ohne Einbauten - die so genannten Leer- oder Strahlungszüge - üblich.

In den unteren Rauchgastemperaturbereichen werden die Kesselzüge mit Rohren ausgestattet, die einen guten konvektiven Wärmeübergang aus dem Rauchgas auf das zu beheizende Medium sicherstellen. Die rauchgasbegrenzenden Wände aller Kesselzüge werden in den meisten Fällen aus Membranwänden gebildet. Diese Membranwände bestehen aus mittels Stegen (4) untereinander verschweißten Rohren (3). Sie bilden eine dichte Abdichtung für die Rauchgase und werden im Allgemeinen durch das Siedewasser in den Rohren gekühlt.

Aus Verfahrens- und materialtechnischen Gründen muss in Teilbereichen der Strahlungszüge der Wärmefluss auf die Membranwände verringert werden. Dies geschieht durch Feuerfestzustellungen - Materialien also, die entsprechend der chemischen und thermischen Belastungen ausgewähll und auf den Membranwänden auf vielfältige Art und Weise befestigt werden.

Die Rauchgase kuhlen sich von den adiabaten Verbrennungstemperaturen in den Strahtungszügen bis auf die geeignete Eintrittstemperatur in den konvektiven Bereich ab. Die geeignete Rauchgaseintrittstemperatur in den konvektiven Bereich ergibt sich aus den Eigenschatten des eingesetzten Brennstoffes und den angestrebten Dampftemperaturen. Bei Müllverbrennungsanlagen liegt diese geeignete Rauch-  gaseintrittstemperatur häufig im Bereich zwischen 500 und 600°C.

Die Begleitstoffe der Brennstoffe, seien es Chlor, Schwefel, Schwermetalle, Alkalien, Erdalkalien und andere Mineralien, bilden in Abhängigkeit von den Verbrennungstemperaturen gas- und dampfförmige Verbindungen, die sowohl in der Gasphase als auch bei der Abkühlung in der kondensierten Phase die eingesetzten Kesselwerkstoffe über verschiedene Korrosionsmechanismen angreifen. Zusätzlich werden auch die inerten Stäube über diese kondensierenden Verbindungen eingebunden und bilden Beläge. Diese Beläge behindern sowohl in den Strahlungszügen als auch in den konvektiven Zügen den Wärmeübergang vom Rauchgas auf die Heizflächen. In den konvektiven Zügen wird durch die Beläge zusätzlich der freie Abzug der Rauchgase behindert.

Bei der Auslegung der Heizflächen strebt man an, dass die Rauchgase in den Strahlungszügen soweit abgekühlt werden, dass die Kondensation der gas- bzw. dampfförmigen Bestandteile vor dem Eintritt in den konvektiven Zug weitgehend abgeschlossen und die Aggressivität der gasförmigen Anteile abgesenkt ist. Insbesondere zu Beginn der Reisezeit - bei belagfreien Heizflächen - und ggf. bei Teillast muss die Rauchgastemperatur vor dem Eintritt in den konvektiven Zug jedoch noch so hoch sein, dass eine ausreichende Überhitzung des Dampfes sichergestellt wird.

Zudem sind über möglichst hohe treibende Temperaturdifferenzen und Wärmeübergänge zwischen dem Rauchgas und dem zu beheizenden Medium die Heizflächen und damit die Herstellungskosten zu minimieren. Die zur Verfügung stehenden Berechnungsmethoden gestatten grundsätzlich eine solche Auslegung.

WO 2004036116 A2 befasst sich mit einer Messeinrichtung für einen Wärmetauscher mit einem Druckrohr und mindestens einem Thermoelement, wobei das Druckrohr eine Rohrwand aufweist, in der eine Einbuchtung vorhanden ist, die sich über einen Teilbereich des Umfangs der Rohrwand erstreckt, wobei die Einbuchtung das Thermoelement aufnimmt und mit Füllmaterial aufgefüllt ist. Das Thermoelement ist dabei außermittig in dem von der Einbuchtung verformten Teilbereich angeordnet.

US 6,485,174 B1 beschreibt ein mit Thermokopplern ausgerüstetes Messgerät, das die Temperatur von Verbrennungsgasen misst, um den Wärmefluss an ausgewählten Positionen einer Membranwand zu bestimmen. Das Messgerät erstreckt sich durch eine Öffnung der Wand und ist an der Außenseite befestigt.

US 4,779,994 A betrifft einen Wärmestrommesser zum Messen des Wärmedurchgangs durch eine Oberfläche. Alle Elemente dieses Messgerätes sind dünne Filme, die durch Sputtering oder einen vergleichbaren Prozess auf diese Wand aufgebracht wurden. Der Wärmestrommesser enthält eine Vielzahl von Thermokoppleranschlussstellen, die in Form einer Thermokette mit heißen und kalten Anschlussstellen auf den zwei Seiten eines planaren Wärmewiderstandselements vorliegen. Elektrisch isolierende und schützende Schichten sind zwischen der Oberfläche und dem Messgerät und über dessen Außenseite aufgebracht. Die vom Messgerät angezeigte Spannung ist ein Maß für den Wärmefluss.

**Aufgabe der Erfindung**

Die Eigenschatten der Brennstoffe diffuser Quellen und damit das Verhalten der Rauchgase sind leider nicht immer genau vorauszusagen. Es ist zu verhindern, dass die angestrebten Rauchgastemperaturen vor dem Eintritt in den konvektiven Strahlungszug durch starke Belegung der Heizflächen weit überschritten werden. Bei bekannter Rauchgasmenge und -zusammensetzung kann über Temperaturmessungen der Rauchgastemperaturen die Abnahme des Wärmeinhalts der Rauchgase bestimmt werden. Durch Bezug auf die Heizfläche kann somit bisher der mittlere spezifische Wärmefluss auf die zugehörigen Heiztlächen ermittelt werden.

Auf Grund dieses Ergebnisses kann man leider über Messung von Rauchgastemperaturen nicht erkennen, in welchen Bereichen der Strahlungszüge die Beläge oder andere Einflüsse den Wärmeübergang so stark behindern, dass die Anlage mit einem Online Reinigungsverfahren gereinigt oder zur Reinigung abgefahren werden muss. Es ist besonders bei der Online Reinigung von Vorteil, wenn der belegte Bereich durch ein Messverfahren bekannt ist. Neben den Belägen ist der Feuerfestzustellung (11) Beachtung zu schenken. Diese schützenden Feuerfestzustellungen (11) haben Standzeiten zwischen einem Jahr und fünf Jahren. Die Feuerfestzustellung wird mittels Spritzverfahren unter Zugabe von Wasser auf die Membranwand aufgebracht, abgezogen und bindet anschließend ab. Bekannt sind auch manuell gestampfte Massen. Die Schichtdicke solcher aufgebrachten Massen liegt im Bereich von 25mm bis 30mm. Die vorgenannten Arten der Feuerfestzustellung werden in zunehmendem Maße durch einfacher zu montierende Kacheln auf SiC (Siliciumcarbid)-Basis ersetzt, die wahlweise hinterlüftet oder hintergossen mit einem speziellen Mörtel auf der Membranwand befestigt werden. Mit dem Erreichen ihrer Lebensdauer können die Feuerfestzustellungen in größeren Segmenten schlagartig abfallen oder einen Rauchgasspalt zwischen sich und der Membranwand ausbilden. Beides ist für das Verfahren nachteilig und kann zukünftig erfindungsgemäß sehr früh erkannt werden. In dem Spalt kommt es zu starken Korrosionen der Membranwand und der Wärmefluss wird durch den zusätzlichen Wärmewiderstand des Rauchgasspaltes behindert. Bei Verlust der Zustellung ist der Wärmefluss höher als geplant und die aggressiven Rauchgase haben direkten Kontakt zu den metallischen Werkstoffen.

Zusätzlich zu den hier beschriebenen Mechanismen gibt es Bereiche in den Kesseln, in denen man für die Auslegung - beispielsweise zur Einhaltung der Mindestverbrennungsbedingungen in Müllverbrennungsanlagen - wissen muss, wie hoch der Wärmefluss in bestimmten Kesselbereichen ist. In diesem Zusammenhang sind bei Müllverbrennungsanlagen besonders der Aufgabebereich des Mülls auf den Rost und der dortige Zündbereich zu nennen. Dort ist im Normalfall eine starke Flamme mit hoher Wärmestrahlung zu beobachten. Es ist jedoch nicht zu ermitteln, ob infolge von Sauerstoffmangel oder optimaler Sauerstoffkonzentration hinter oder innerhalb der Flamme die gleiche, eine höhere oder tiefere Wärmestrahlung auf die Kesselwande einwirkt.

Da die hier beschriebenen Eigenschaften bei Betrieb der Anlage nur in leilbereichen über Schauluken beobachtet werden können, fehlt bislang ein Verfahren, mit dem der spezifische Wärmefluss auf die Membranwände bestimmt werden kann.

Erfindungsgemäß sollen die hier beschriebenen Eigenschaften und Nachteile, die bei Betrieb der Anlage nur in Teilbereichen über Schauluken zu erkennen sind, überwunden werden.

Grundsätzlich kann der Wärmefluss mit einem aufwendigen Verfahren durch die Membranwand punktuell mittels Messung von Temperaturdifferenzen an einer Schicht mit bekanntem Wärmewiderstand bestimmt werden. Die Firma Clyde Bergemann vertreibt ein solches Gerät unter dem Namen Smart Flux™ Sensor CBW01.

Da der Wärmefluss bei diesem Verfahren auf die Membranwände von der Rauchgasseite und damit der aggressiv belasteten Seite zu messen ist, muss diese grundsätzüch einfache Messung erheblichen Belastungen standhalten. Zum einen sind die elektrischen Isolationen so zu wählen, dass sie bei den vorliegenden Temperaturen funktionsfähig bleiben. Zum anderen ist die gesamte Vorrichtung gegen die knrrosiven und mechanischen Belastungen bei Betrieb und Revisionen zu schützen. Zu den höchsten Belastungen dürfte die Erneuerung der Feuerfestzustellung gehören. Die verbrauchte Feuerfestzustellung wird üblicherweise mit Drucklufthämmern und/oder durch Sandstrahlen entfernt. Eine weitere Schwierigkeit dürfte die Platzierung der beschriebenen Vorrichtung sein. Da die Membranwand eine vergleichsweise komplexe Form hat, durch die der Wärmefluss nicht unbedingt senkrecht zur Oberfläche in die Wand eintritt und die abgewickelte Oberfläche ca. 1,4-fach höher als die projizierte Oberfläche ist, ist eine repräsentative Position der Wärmestrommessung sehr schwierig zu ermitteln.

## Erfindung

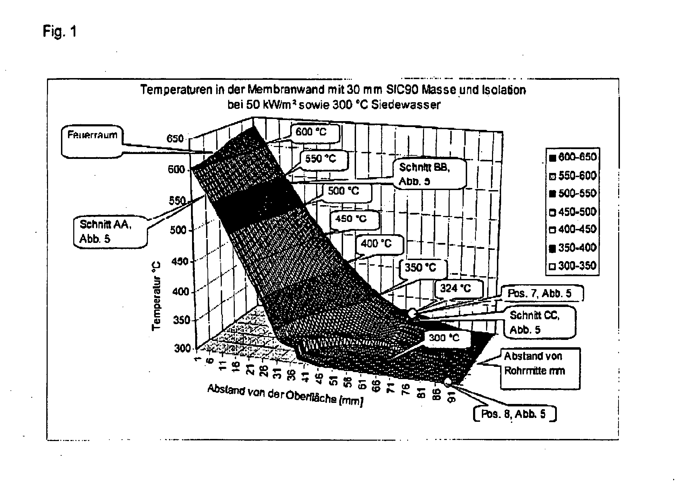

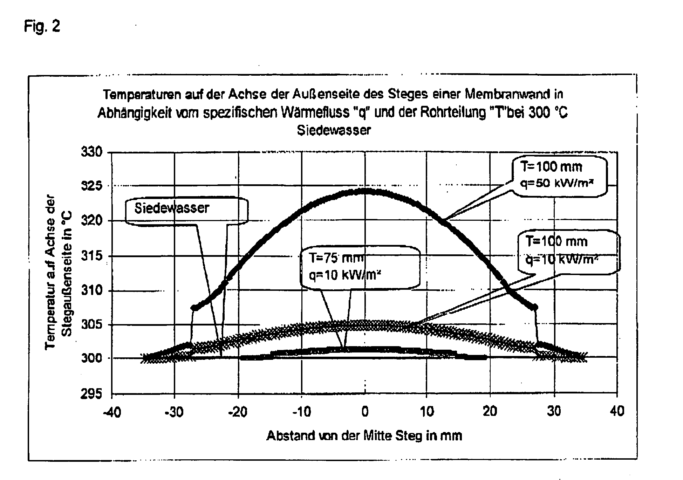

Die Berechnung lokaler Temperaturen nach der Methode der finiten Elemente unter Berücksichtigung der Eigenschaften von Membranwandmaterial, Rohrabstand, Material der Feuerfestzustellung und ihrer Schichtdicke erlaubt die Abschätzung der später vorliegenden Bedingungen bei optimaler Verbrennung. Die Erfindung wird im Folgenden an einem einfachen und weit verbreiteten Membranwandaufbau mit einer nicht segmentierten Feuerfestzustellung erläutert. Bel der Berechnung von Temperaturen in Membranwänden nach der Methode der finiten Elemente wurde beobachtet, dass die Temperatur im Steg infolge des Wärmeflusses und der Wärmewiderstände höher ist als die des Rohres (Abbildung 1). Genauere Untersuchungen haben gezeigt, dass zwischen der Temperaturdifferenz im Bereich der Membranwand, z.B. von der Mitte des Steges zum rauchgasabgewandten Scheitel des Rohres und dem spezifischen Wärmefluss ein proportionaler Zusammenhang besteht (Abbildung 2). Bei sehr geringen Wärmeverlusten durch die Isolation (5) ist die dem Rauchgas abgewandte Scheiteltemperatur des Rohres annähernd gleich der des Siedewassers.

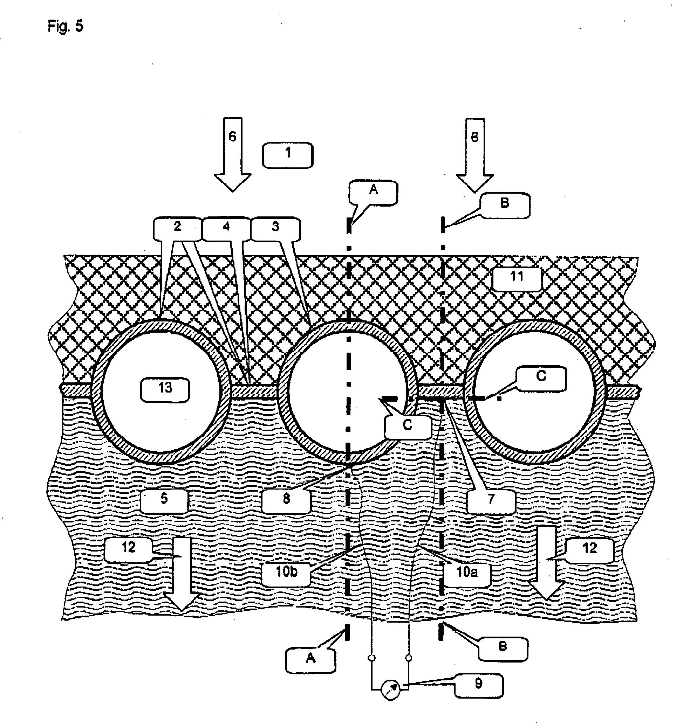

Die Abbildung 1 zeigt in einer 3-dimensionaten Ansicht die Materialtemperaturen in einem Ausschnitt einer typischen Membranwand gemäß Schnitt AA und BB in Abbildung 5. Die Berechnungen nach der Methode der finiten Elemente wurden für eine Membranwand mit einer Teilung (der Abstand der Rohre) von 100 mm, einer thermischen Belastung von 50 kW/m$^2$ bei einer Siedewassertemperatur von 300 °C durchgeführt. Zusätzlich wurde in der Berechnung berücksichtigt, dass die Membranwand mit einer gut wärmeleitenden Feuerfestzustellung (SIC90 Masse) geschützt ist, die eine Höhe von 30 mm über dem Scheitel der Rohre hat. Durch die unterschiedliche Wärmeleitfähigkeit der einzelnen Komponenten - Feuerfestzustellung, Stahl und Wasser -, den Wärmeübergang vom Rohr auf das Wasser und die unterschiedlichen Wärmeflüsse lassen sich die Materialtemperaturen in der Kontur gut erkennen.

In dieser dreidimensionalen Darstellung sind zusätzlich die Messpunkte 7 und 8 sowie die Schnittlinie CC der Abbildung 5 eingetragen.

Das Diagramm in der Abbildung 2 zeigt den Temperaturverlauf auf einer Schnilllinie CC der Abbildungen 1 und 5 durch die Membranwand, beispielsweise den auf der rauchgasabgewandten Seite des Steges (4) parallel zum Steg (4) bis in das Siedewasser (13) veriaufenden Temperaturverlauf. Das auffällige symmetrische Temperaturprofil entsteht dadurch, dass die auf den Auftreffpunkt, beispielsweise auf den Steg (4) auftreffende Wärme in Richtung auf die Rohre (3) abfließt. In diesem Fall liegt das Maximum der Temperatur in der Mitte des Steges. Die experimentell bestätigten Temperaturverläufe wurden aus Berechnungen nach der "Methode der finiten Elemente" entsprechend der Abbildung 1 entnommen. In der Abbildung 2 werden zusätzlich Berechnungsergebnisse für geänderte Parameter dargestellt. Für die Parametervariation wurden die Teilung von 100 mm auf 75 mm und der Wärmefluss von 50 kW/m$^2$ auf 10 kWlm$^2$ variiert. Die Temperaturdifferenz von der Mitte der rauchgasabgewandten Seite des Steges zum Siedewasser fällt von 324 °C - 300 °C = 24 °C auf 304,8 °C - 300 °C = 4,8 °C linear um den Faktor 5 ab, dies bei einem Abfall des Wärmeflusses von 50 kW/m$^2$ auf 10 kW/m$^2$. Über die (rechnerische) Bestimmung dieses proportionalen Zusammenhangs kann man über die kontinuierliche Messung der Differenztemperaturen kontinuierlich den spezifischen Wärmefluss ermitteln (Gleichungen 1- 4).

Die Abbildung 2 zeigt zugleich, dass die maximale Temperatur auf der rauchgasabgewandten Seite des Steges mit dem Abfall der Teilung von 100 mm auf 75 mm deutlich von 304,8 auf 301,2 °C fällt. Dies lässt sich damit erklären, dass auf den kürzeren Steg weniger Wärme auftrifft und der Wärmewiderstand mit dem kürzeren Steg kleiner ist. Bei der Bestimmung des Proportionalitätsfaktors ist daher insbesondere die Teilung der Membranwand zu berücksichtigen.

Mit Hilfe dieses erfindungsgemäßen Verfahrens kann der Wärmefluss von der äußeren geschützten Seite der Membranwand annähernd an jeder Stelle der Membranwand über die Bestimmung der Temperaturdifferenz und den oben genannten proportionalen Zusammenhang bestimmt werden. Es ist möglich, wichtige Daten für die Auslegung des Kessels, über den Zustand der Feuerfestzustellung sowie der Beläge zu gewinnen. Man kann damit entscheiden, in welchen Bereichen der Kessel mit der Online Reinigung gereinigt werden muss. Es können Erkenntnisse gesammelt werden, welche Besonderheiten bei der Verbrennung von spezifischen Abfällen auftreten und welche Einstellungen dazu führen, dass die Belegung der Heizflächen weniger stark ausgeprägt ist. Dieses erfindungsgemäße Verfahren lässt durch diese Informationen eine bessere Kesselsteuerung zu.

Diese oben beschriebene Temperaturdifferenz, die häufig bei Materialtemperaturen (Siedewassertemperaturen) zwischen 250 bis 300 °C nur wenige Grad bis annähernd 100 °C betragen kann, kann grundsätzlich mit zwei Thermoelementen oder Widerstandstemperaturmessungen bestimmt werden.

Ein Thermoelement ist ein Bauteil aus zwei verschiedenen Metallen, welches sich des Seebeck-Effektes bedient, um eine Spannung zu erzeugen. Diese kann zum Beispiel genutzt werden, um Temperaturen zu messen. Der Seebeck-Effekt besagt, dass zwei Metalle, die miteinander verbunden werden, an ihren Grenzschichten eine thermoelektrische Spannung entstehen lassen. Diese Spannung ist temperaturabhängig und bewegt sich in einem Bereich von wenigen Mikrovolt. Mit Hilfe der so genannten thermoelektrischen Spannungsreihe (vgl. DIN EN 60584) kann eine Aussage über die Temperatur an der Messstelle gemacht werden. Jedes Metall besitzt einen thermoelektrischen Koeffizienten, der meist gegen Platin angegeben wird. Eine einfache Gleichung ist für die Praxis vallkommen ausreichend:

$$U_{th\,1} = (k_{Fe} - k_{Cu}N_i) \cdot T_{Mess\,1} \qquad\qquad (Gl.\ 1)$$

Im Folgenden wird von einem Thermoelement des Typs J ausgegangen. Der positive Thermodraht ist handelsübliches, reines Eisen (99,95% Fe), das üblicherweise bedeutende Mengen von Verunreinigungen an Kohlenstoff, Chrom, Kupfer, Mangan, Nickel, Phosphor, Silizium und Schwefel enthält. Der negative Thermodraht ist eine Kupfer-Nickel-Legierung, die häufig als Konstantan bezeichnet wird. Beide Drähte, die üblicherweise elektrisch isoliert in Schutzrohren oder Schutzhülsen, an die zu messende Stelle geführt werden, bilden das Thermoelement.

$$U_{th\,1} = (k_{Fe} - k_{CuNI}) \cdot T_{Mess\,1} \qquad\qquad (Gl.\ 1)$$

$$U_{th\,2} = (k_{Fe} - k_{CuNi}) \cdot T_{Mess\,2} \qquad (Gl.\,2)$$

$$U_{th\,2\text{-}1} = (k_{Fe} - k_{CuNi}) \cdot (T_{Mess\,2} - T_{Mess\,1}) \qquad (Gl.\,3)$$

Die Gleichungen 1 bis 3 beschreiben die Bildung der Thermospannung aus den Messstellen der Temperaturen 1 und 2, wobei kCuNi und kFe die thermoelektrischen Koeffizienten der Legierung CuNi und Fe darstellen und $T_{Mess1}$ sowie $T_{mess\,2}$ die Temperatur an der zugehörigen Messstelle ist.

Um den spezifischen Wärmefluss auf eine Membranwand zu ermitteln, benötigt man somit die Differenztemperatur von zwei repräsentativen Messstellen (Gl. 4)

$$T_{Mess1} - T_{Mess2}\ [°C] = \Delta T\ [°C] = \sim \Delta U\ [V] = \sim q\ [W/m^2] \qquad (Gl.\,4)$$

Bei der praktischen Ausführung von zwei Messungen und der Differenzbildung der Ergebnisse kann es infolge der nach DIN zulässigen Fehler - für die beabsichtigte Messung - zur Verdoppelung der Messfehlers kommen. Der ASTM Standard E230-87 in der Ausgabe 1992 des ASTM Jahrbuches gibt die Toleranzen der Grundwertreihe für Thermopaare Typ J (Eisen Konstantan) mit $\pm$ 2,2 °C oder $\pm$ 0,75% (es gilt jeweils der größere der beiden Werte) zwischen 0 °C und 750 °C an. Thermopaare des Typs J können auch mit speziellen Toleranzen von $\pm$1,1 °C oder $\pm$0,4% geliefert werden. Auch bei hoher Genauigkeit sind die möglichen Fehler bei 300°C mit $\pm$ 1,1 bzw. $\pm$ 1,2 °C der einzelnen Thermoelemente beachtlich. Werden die Temperaturen von zwei Messstellen über Differenzbildung verglichen, sind Fehler von bis zu 2,2 °C zu erwarten. Weitere Fehler sind über die Befestigung der Thermoelemente, die in elektrisch isolierten Schutzrohren bzw. Hülsen geführt werden, an der Messstelle der Membranwand, nicht auszuschließen.

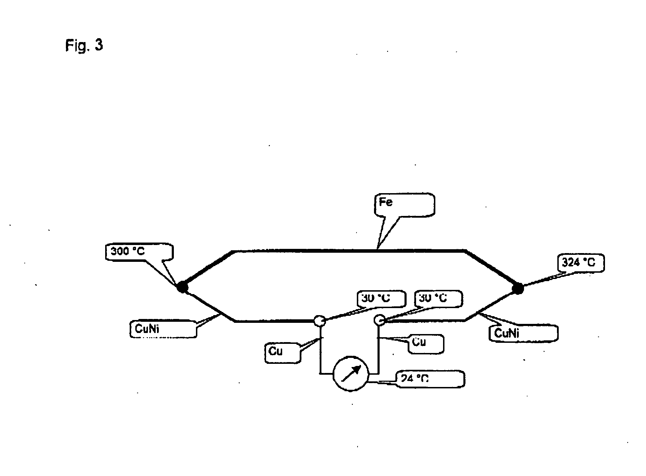

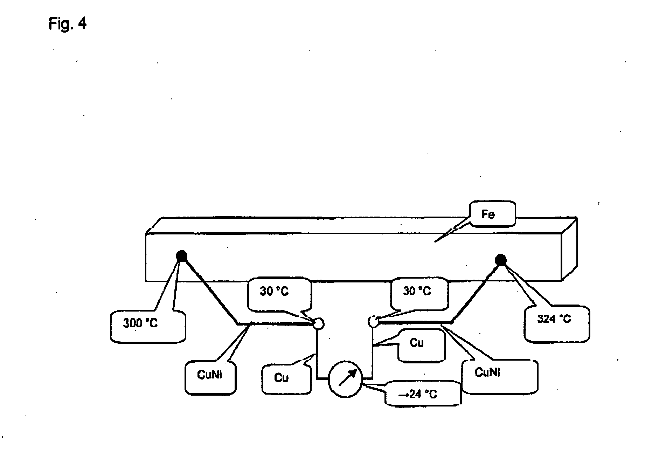

In den Abbildungen 3 und 4 werden das bekannte und das erfindungsgemäße Messverfahren gegenübergestellt. In der Abbildung 3 wird das übliche Messverfahren dargestellt. In der Abbildung 4 wird gezeigt, wie das Grundmaterial erfindungsgemäß als Teil des Thermoelements genutzt wird. Für den Fall, dass das Grundmaterial nicht dem Eisen des Typs J entspricht, kann der thermoelektrische Effekt kFe über Ver-9 teichsmessungen bestimmt werden.

(Auch bei der Differenztemperaturmessung muss $k_{Fe}$ ggf. gemessen werden.)

Erfindungsgemäß wird daher vorgeschlagen, das Grundmaterial der Wärmeübertragungsfläche beispielsweise bestehend aus Rohren (3) und Stegen (4) der oben genannten - aus niedriglegiertem Stahl gefertigten - Membranwand (2), für die beiden Thermoelemente als gemeinsames positives Grundmaterial zu wählen und für beide Thermoelemente jeweils nur einen Konstantandraht 10a und 10b an den Stellen mit dem Grundmaterial zu verbinden, an denen die Temperaturdifferenz bestimmt werden soll. Dieses Verfahren ist besonders einfach durchzuführen, weil die zwei negativen Konstantandrähte (10 a, 10 b) ohne Berücksichtigung von elektrischer Isolation zum Grundmaterial direkt auf diesem verschweißt werden können.

Bei der üblichen Differenzmessung mit zwei Temperaturmessungen mit einem jeweiligen Messbereich von 0 bis 300 °C kann sich im ungünstigen Fall der Messfehler zu 2,2 °C ergeben. Bei dieser Differenzmessung über zwei Temperaturmessungen mit separaten Thermoelementen und einem Messbereich von 0 - 10°C könnte unter ungünstigen Umständen ein Messfehler von 22 % resultieren.

Bei der gleichen Genauigkeit von 0,4 % und einem Messbereich der erfindungsgemäßen Differenzmessung von 0 - 10 °C ergibt sich für die erfindungsgemäße Differenzmessung ein Fehler von nur 0,04 °C. Hinzu kommt, dass bei der erfindungsgemäßen Differenzmessung 50 % des Thermodrahtmateriats und ein Messumformer eingespart werden.

Durch die erfindungsgemäße Differenzmessung in einem der maximalen Differenztemperatur und damit dem maximalen Wärmestrom angepassten Messbereich kann somit eine Messgenauigkeit von annähernd 0,4 % erreicht werden. Wird der Messbereich aus Sicherheitsgründen auf den doppelten Wert der erwarteten Differenztemperatur ausgelegt, ist der zu erwartende Messfehler noch unter 1 %. Bei Ahstellungen der Anlage kann der Nullpunkt kalibriert werden, da dann die Thermospannung 0 ist. Durch die Wahl des Grundmaterials als Teil der erfindungsgemäßen Differenzmessung entfallen alle Fehler, die üblicherweise durch Wärmeverluste von Befestigungselementen entstehen können.

Durch Reinigung der Membranwand vor dem Antahren der Anlage kann bei vergleichbaren Betriebszuständen die Abnahme des Wärmeflusses durch die Belagbildung bestimmt werden. Werden zudem durch Online-Reinigung die Beläge während des Betriebes der Anlage entfernt, sind über die Messung des Wärme flusses Optimierungen des Verbrennungsbetriebes möglich.

Die Positionen der Kontaktstellen werden gemäß theoretischen Abschätzungen über die zu erwartenden Wärmeflüsse und der gefährdeten Bereiche der Feuerfestzustellung gewählt. Langsame und stetige Abnahme der Differenztemperatur und damit des Wärmeflusses nach der Reinigung bei Stillständen oder der Online-Reinigung kennzeichnen die Ausbildung von Belägen. Schlagartige Abweichungen mit einem Anstieg des Wärmeflusses lassen auf Verlust von Feuerfestzustellungen schließen. Der Abfall des Wärmeflusses bei vergleichbaren Betriebszuständen nach einer Abreinigung der Beläge lässt auf Ablösen und Spaltbildung von Feuerfestzustellungen schließen.

In kritischen Bereichen kann mittels vertikal angeordneter Messstellen die Funktionalität der Feuerfestzustellung überwacht werden. In diesem Zusammenhang ist der obere Abschluss der Zustellung in Rauchgasströmungsrichtung wichtig. Durch Kontaktpunkte vor und nach dem Abschluss der Stampfmasse kann weitgehend unabhängig von den Betriebszuständen erkannt werden, ob sich in der Zustellung Änderungen ergeben haben.

Das beschriebene Verfahren und die vorgeschlagenen Vorrichtungen sind grundsätzlich für alle Typen von Rost, Wirbelschicht, Staubbrenner und alternativ befeuerte Verbrennungskessel geeignet.

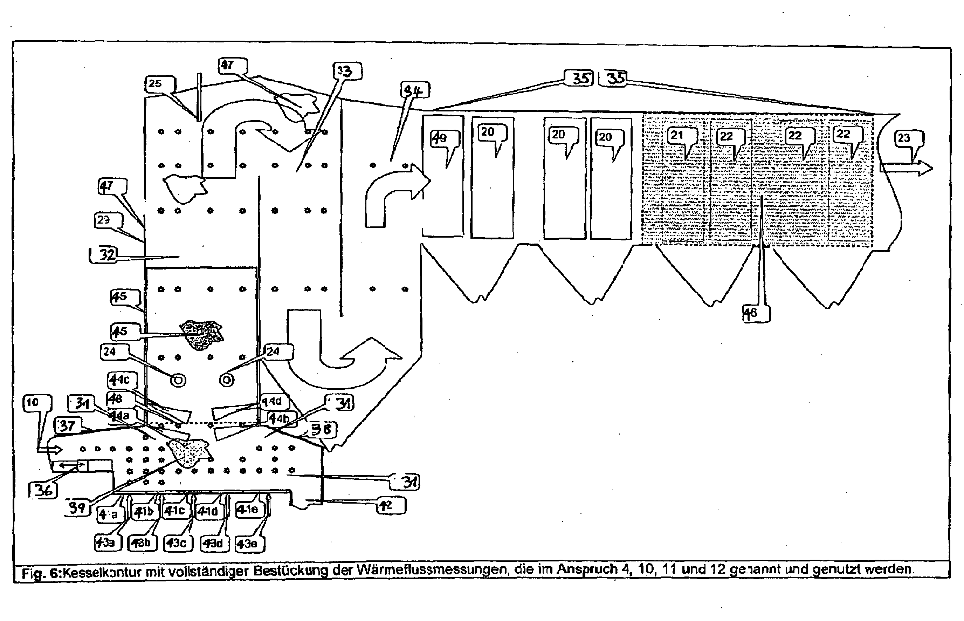

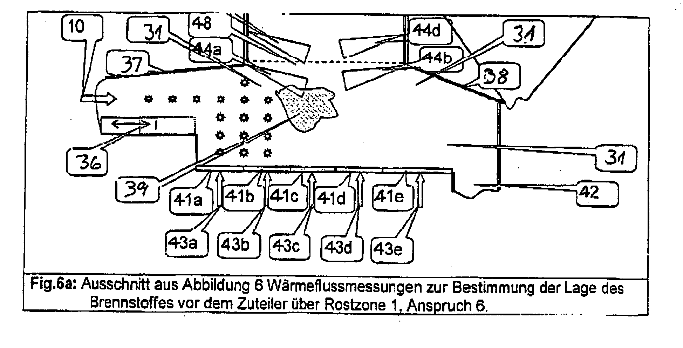

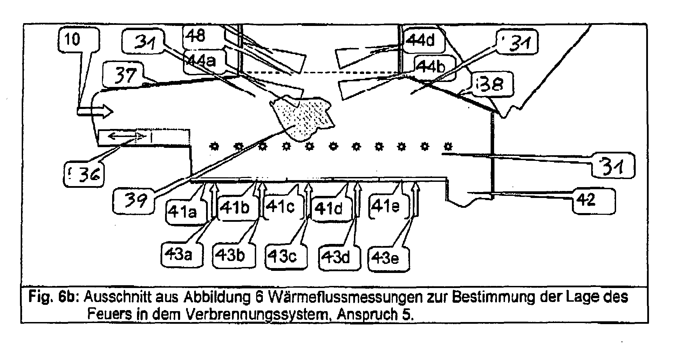

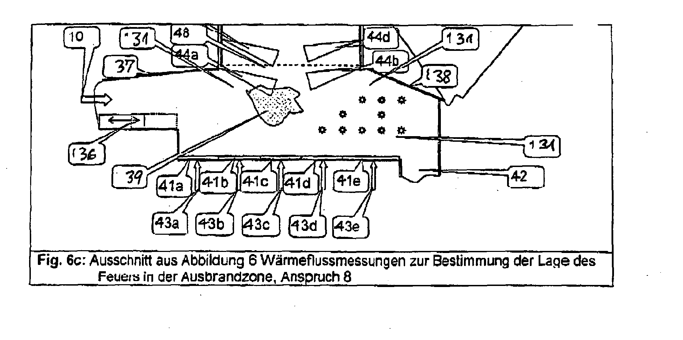

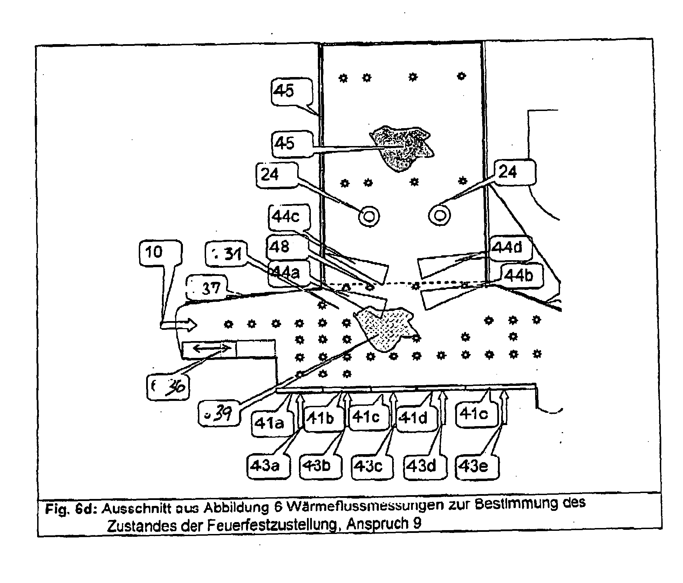

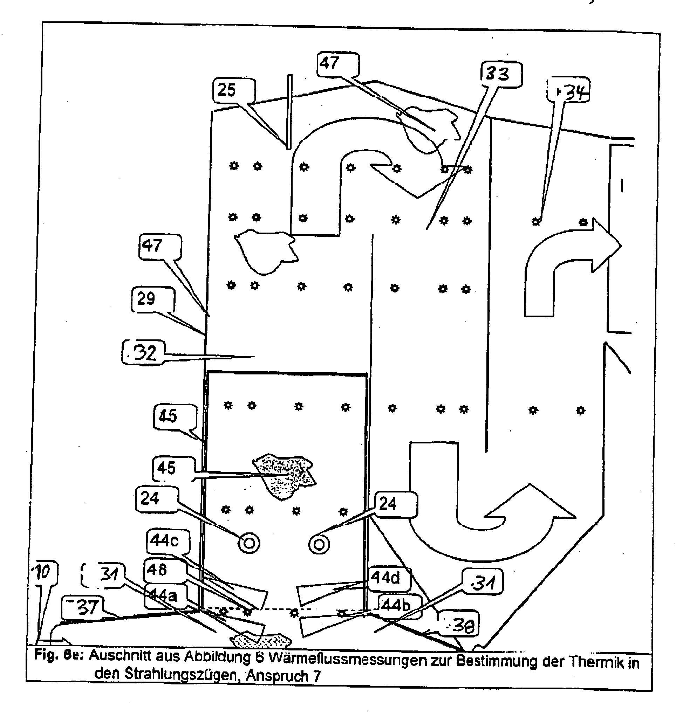

In der Figur 6 ist ein typischer Verbrennungskessel mit einem Feuerraum (31), dem ersten Strahlungszug (32), dem zweiten Strahlungszug (33) und dem dritten Strahlungszug (34) sowie einem konvektiven Zug (35) dargestellt. Der Feuerraum (31) ist im Wesentlichen begrenzt durch den Zuteiler (36), die Zünddecke (37), die Ausbranddecke (38), die Seitenwände des Feuerraums (39) und den Rost (41a-e). Die Brennstoffzufuhr ertoigt über die Müllzufuhr (40) und den Zuteiler (36). Die Verbrennung erfolgt auf dem Verbrennungsrost (41a-e), der in diesem Beispiel in 5 Rostzonen untergliedert ist, die einzeln oder gemeinsam angetrieben werden können Die ausgebrannte Schlacke fällt nach dem Rost (41) in den Schlackefallschacht (42) zum Entschlacker. Die Primärluft (43 a-e) wird getrennt durch die Rostzonen (41a-e) zugeführt: Die Sekundärluft (44 a-d) dient der Vermischung und dem sichereren Ausbrand der Gase vor dem Eintritt in den ersten Strahlungszug (32). In modernen Anlagen wird die Sekundärluft auf der Stirn- und Ausbrandseite in 2 Ebenen eingedüst. Über der Sekundärlufteindüsung (44 a-d) sind die Anfahr und Stützbrenner (24) installiert.

Die Wände des ersten Strahlungszuges können zur Einhaltung der Mindestverbrennungsbedingungen und zum Schutz der Heizflächen gegen Korrosionen im unteren Bereich mit Feuerfestzustellung (45) zugestellt sein.

Die Membranwände (29) über der Feuerfestzustellung (45) im ersten Strahlungszug (32) und zum Teil im zweiten Strahlungszug (33) können mit einer Aufschweißung aus Nickelbasislegierungen (47) gegen Korrosionen geschützt werden. Danach sind bei den üblichen Siedewassertemperaturen von 240 bis 320 °C und den abgesenkten Rauchgastemperaturen üblicherweise keine Korrosionsschutzmaßnahmen im unteren Teil des zweiten Zuges (33) und in dem dritten Zug (34) erforderlich.

Die Rauchgase kühlen sich üblicherweise vom Eintritt (48) in den ersten Zug (32) mit 1000- 1300 °C bis zum Verlassen des dritten Zuges (34) auf 450- 650 °C ab und treten mit diesen Temperaturen in den konvektiven Zug (35) ein. Im konvektiven Zug (35) kühlen sich die Rauchgase an einem Schutzverdampfer (49), an Überhitzern (20), Verdampfern (21) und Economisern (22) auf 180- 230 °C ab und verlassen den Kessel durch den Abgaskanal (23).

Im Bereich (46) der Figur 6 bilden sich bisher in den Belägen auf katalylischem Weg neue Dioxine und Furane (De Novo Synthese).

In den Figuren 6 a-d ist die Einbaulage der erfindungsgemäßen Wärmeflussmessungen und die erfindungsgemäßen vorgehensweisen eingetragen.

Fig. 6: Kesselkontur mit vollständiger Bestückung der Wärmeflusssensoren, die zur Ermittlung der in den Ansprüchen 4, 10, 11 und 12 genannten Differenztemperaturen und Temperaturprofile genutzt werden.

Fig. 6a: Ausschnitt aus Figur 6, Wärmeflussmessungen zur Bestimmung der Lage des Brennstoffes vor dem Zuteiler über Rostzone 31, gemäß Anspruch 6.

Fig. 6b: Ausschnitt aus Figur 6. Wärmeflussmessungen zur Bestimmung der Lage des Feuers in dem Verbrennungssystem, gemäß Anspruch 5.

Fig. 6c: Ausschnitt aus Figur 6, Wärmeflussmessungen zur Bestimmung der Lage des Feuers in der Ausbrandzone, gemäß Anspruch 8.

Fig. 6d: Ausschnitt aus Figur 6, Wärmeflussmessungen zur Bestimmung des Zustandes der Feuerfestzustellung, gemäß Anspruch 9.

Die nachfolgenden Ausführungsbeispile der Erfindung basieren auf einer typischen Rostverbrennungsanlage für Müll gemäß Fig. 6. Zur besseren Übersicht über die Velfalt der Regelungsmöglichkeiten sind in der Tabelle 1 die zu verändernden Stellgrößen und Beeinflussungen Über den Erfindungsmerkmalen aus den gemäß Ansprüchen 3 bis 12 erhaltenden Informationen aufgetragen.

| | | Wärmeflussmessung | Wärmewiderstand | Feuerlage auf dem Rost | Brennstoff vor Zuteiler | Thermk auf dem Rauchgasweg | Wärmeleistung Ausbrandzone | Zustand Feuerfestzustellung | Belagzustand | Trenderkennung | reproduzierbare Einstellung |
|---|---|---|---|---|---|---|---|---|---|---|---|
| Erfindungsmerkmal gemäß Anspruch | | 3 | 4 | 5 | 6 | 7 | 8 | 9 | 10 | 11 | 12 |
| Verfahren/Vorrichtung | | Verf. | Verf. | Verf. | Verf. | Verf. | Verf. | Verf. | Verf. | Verf. | Verf. |
| **Stellgröße / Beeinflussung** | | | | | | | | | | | |
| Leistung | Dampf | | | x | X | x | X | | x | x | x |
| | Müll | | | x | X | x | x | | x | x | x |
| Brennstoff | zuführen | | | x | X | x | x | | x | x | x |
| | zwischenlagern | | | x | X | x | x | | x | x | x |
| | trocknen | | | x | X | x | x | | x | x | x |
| | fördern | | | x | X | x | x | | x | x | x |
| | schüren | | | x | | x | x | | x | x | x |
| Luftverteilung | Primär/Sekundärluft | | | x | | x | x | | x | x | x |
| | Primärluft 5 -fach | | | x | X | x | x | | x | x | x |
| | Temp. Primär-L. 5-fach | | | x | X | x | x | | x | x | x |
| | Sekundär-Luft 4-fach | | | x | | x | | | x | x | x |
| Laufzeit nach Reinigung | | x | x | | | | | x | | x | x |
| Müllqualität | | x | x | | | | | x | | x | x |
| Luftüberschuss | | x | x | | | | | x | | x | x |

Tab. 1: Zusammenhang zwischen Information aus Messungen der Differenztemperatur und den daraus folgenden Eingriffen zur Leistungsregelung des Heizkraftwerkes

**Zur Regelung**

Die wesentliche Regelung ist die Feuerungsleistungsregetung, die unterschiedliche Zielsetzungen hat. Gesetzlich vorgegeben ist ein sicherer Ausbrand der Schlacke und der Rauchgase bei Mindesttemperaturen und Mindestverweilzeiten. Zusätzlich gibt es intensive Bestrebungen, den Betrieb der Anlage trotz unterschiedlicher Zusammensetzungen des Brennstoffes möglichst gleichmäßig zu gestalten, wobei diese Zielsetzung den zuerst genannten gesetzlichen Anforderungen widersprechen kann Man kann sich - vereinfacht ausgedrückt - für eine stabile Dampfleistung oder für eine stabile Verbrennungsleistung entscheiden. Bei der stabilen Dampfleistung ist der Dampf die wesentliche Führungsgröße, die über die Feuerungsleistungsregelung die Verbrennungsleistung regelt. Da die Information der Dampfmengenleistung deutlich verzögert gegenüber der tatsächlichen Verbrennungsleistung in die Feuerungsleistungsregelung eingeht, werden weitere Informationen aus dem Betrieb zur Verfügung gestellt. Bisher werden bevorzugt die Deckentemperaturmessung und der Sauerstoffgehalt im Rauchgas im Bereich des Economisers genutzt. Zukünftig können die Informationen der Wärmetiussmessungen vorteilhaft genutzt werden.

Wie bereits eingangs dargestellt, wird bei der alternativen Sauerstoffregelung die Sauerstoffzehrung (Produkt der Sauerstoffänderung und der zugeführten Luftmenge) und damit die chemische Verbrennungsleistung bei gleicher Luftmenge konstant gehalten.

Wichtig für die Durchführung des erfindungsgemäßen Verfahrens ist, dass genug brennfähiger Müll auf dem Rost liegt, damit im Bedarfsfall die Wärmeleistung durch Schüren schnell steigt Durch die Wärmeflussmessung entlang des Rostes (Anspruch 5) kann man erkennen, in welchen Rostbereichen noch Brennstoff liegt. In der Tabelle 1 wird deutlich, dass praktisch alle Stellgrößen benutzt werden können, um die Feuerungslage auf dem Rost in den geeigneten Temperaturbereich zu bringen. Der Temperaturveich kann ergeben, dass die Leistung (Dampf oder Müll) verändert werden muss. Wurde zu wenig Brennstoff dosiert, kann der Regler das an den Wärmeflussmessungen, die im Bereich des Zuteilers installiert sind, erkennen (Anspruch 6). Hier sollte zunächst die Dosierleistung erhöht oder alternativ die Verbrennungsleistung verringert werden. Es kommen jedoch auch die weiteren in Tabelle 1 genannten Maßnahmen in Betracht. Wird beispielsweise weniger und kältere Luft In diese Rostzone eingebracht, brennt der Müll dort weniger schnell ab.

Ist die Wärmeentbindung auf dem Ende des Rostes in der Ausbrandzone zu hoch, wird das mit den Wärmeflussmessungen, die im Anspruch 8 genannt werden, erkannt. In diesem Fall kommt für die Regelung jede Maßnahme in Betracht, von der Rücknahme der Leistung bis zur Steigerung der Luftvorwärmung. Die Entscheidung trifft das Regelprogramm je nach Vorgabe der Optimierungsbedingung.

**Bezugszeichenliste zu Figur 1-5**

| | |
|---|---|
| 1 | Feuenaum |
| 2 | Membranwand |
| 3 | Rohr |
| 4 | Steg |
| 5 | Isolation |
| 6 | Spezifischer Wärmefluss aus dem Feuerraum (1) |
| 7 | Kontaktpunkt Mitte Steg |
| 8 | Kontaktpunkt rauchgasabgewandter Rohrscheitel |
| 9 | Thermospannung |
| 10 a und b | Konstantandraht |
| 11 | Feuerfestzustellung |
| 12 | Spezifischer Wärmeverlust durch Isolation (5) |
| 13 | Siedewasser |

**Beschreibung zu Figur 6**

| | |
|---|---|
| (31) | Feuerraum |
| (32) | erster Strahlungszug |
| (33) | zweiter Strahlungszug |
| (34) | dritter Strahlungszug |
| (35) | konvektiver Zug |
| (36) | Zuteiler |
| (37) | Zünddecke |
| (38) | Ausbranddecke |
| (39) | Seitenwände des Feuerraums |
| (40) | Müllzufuhr |
| (41a-e) | Verbrennungsrost Zone 1-5 |
| (42) | Schlackefallschacht |
| (43) | Primärluft Zone 1- 5 |
| (44) | Sekundärluft Stirnseite unten (a), oben (c) |
| (44) | Sekundärluft Ausbrandseite unten (b), oben (d) |
| (45) | Feuerfestzustellung im ersten Zug |
| (46) | Bereich für die de Novo Synthese |
| (47) | austenitische Aufschweißung |
| (48) | Eintritt in den ersten Zug |
| (49) | Schutzverdampfer |
| (20) | Überhitzer |

(21)     Verdampfer
(22)     Economiser
(23)     Abgaskanal
(24)     Anfahr- und Stützbrenner
(25)     Kesseldecktemperatur
*        Wärmeflussmessung


**Patentansprüche**

**1.** Verfahren zur Erfassung des spezifischen Wärmeflusses (q) auf eine aus Stegen und mit einem beheizbarem Medium durchflossenen Rohren bestehenden Membranwand, **gekennzeichnet durch** die Schritte

a) Messung der Temperaturdifferenz ($\Delta T$) zwischen einem Steg und einem Rohr mittels mindestens zweier Thermoelemente, welche über Kontaktstellen (7, 8) mit einem Steg und einem Rohr verbunden sind,
b) Berechnung des spezifischen Wärmeflusses aus der Temperaturdifferenz zwischen Steg und Rohr aus der Gleichung $q = \Delta T$.

**2.** Verfahren nach Anspruch 1, **dadurch gekennzeichnet, dass** die Thermoelemente die Temperaturdifferenz an der rauchgasabgewandten Seite eines von der Membranwand begrenzten Heizkessels messen, wobei insbesondere das Rohr dem Steg benachbart ist, und die Temperaturen vorzugsweise in der Mitte des Steges und/oder vorzugsweise am Scheitel des Rohres gemessen werden, wobei das die Rohre durchfließende beheizbare Medium vorzugsweise Siedewasser ist.

**3.** Verfahren nach Anspruch 1 oder 2, **dadurch gekennzeichnet, dass** für das Verfahren mindestens eine Vorrichtung nach einem der Ansprüche 7 bis 9 verwendet wird, wobei bevorzugt mehrere dieser Vorrichtungen Temperaturdifferenzen an mehreren Stellen des Kessels messen.

**4.** Verfahren nach einem der Ansprüche 1 bis 3, **dadurch gekennzeichnet, dass** die Thermoelemente die Temperatur mittels des Seebeck-Effektes messen, wobei die Thermoelemente vorzugsweise Eisen und Konstantan enthalten und wobei insbesondere das Grundmaterial, bestehend aus den Stegen und Rohren der Membranwand als Teil der Thermoelemente genutzt wird und die Thermoelemente besonders bevorzugt aus der eisenhaltigen Membranwand und daran angebrachten Konstantandrähten bestehen, wobei die Konstantandrähte vorzugsweise direkt mit der Membranwand verschweißt sind.

**5.** Verfahren nach einem der Ansprüche 1 bis 4, **dadurch gekennzeichnet, dass** der Wärmefluss, vorzugsweise der Wärmefluss über die Reisezeit und damit die Art und Größe der Wärmewiderstände, aus den aus dem Betrieb erhaltenen Messdaten über die Differenztemperatur online bestimmt wird.

**6.** Verfahren nach einem der Ansprüche 1 bis 5, **dadurch gekennzeichnet, dass**

- mehrere Temperaturdifferenzen von Membranwänden im Bereich des Feuerraums und der Strahlungszüge gemessen werden,
- ein Vergleich der gemessenen Daten mit den vorher ermittelten optimalen Daten durchgeführt wird,
- eine Einstellung der Verbrennungsbedingungen wie Änderung der Brennstoffzusammensetzung, der Sauerstoffzugabe oder der Rauchgasgeschwindigkeit getätigt wird, und
- eine Online-Reinigung in den Strahlungszügen durchgeführt wird solange, bis der über die Temperaturdifferenz gemessene Wärmefluss mit den Werten der vorher ermittelten optimalen Zustände übereinstimmt.

**7.** Vorrichtung für eine dem Feuerraum eines Kraftwerkes nachgeschaltete Wärmeübertragungsfläche, bestehend aus Rohren für das zu beheizende Medium und aus Stegen, die mit den Rohren verschweißt sind zur Bildung einer durchgehenden Membranwand, enthaltend diese Membranwand, **dadurch gekennzeichnet, dass** an der Membranwand mindestens zwei Thermoelemente gemäß dem Verfahren nach einem der Ansprüche 1 bis 6 angeordnet sind, von denen mindestens eines über eine Kontaktstelle (7) mit einem Steg verbunden ist, und mindestens eines über eine Kontaktstelle (8) mit einem Rohr verbunden ist, und dass die Thermoelemente die Temperaturdifferenz zwischen Steg und Rohr messen.

**8.** Vorrichtung nach Anspruch 7, **dadurch gekennzeichnet, dass** die Temperaturen auf der rauchgasabgewandten Seite eines von der Membranwand begrenzten Heizkessels gemessen werden, wobei insbesondere das Rohr dem Steg benachbart ist und die Temperaturen vorzugsweise in der Mitte des Steges und/oder vorzugsweise am Scheitel des Rohres gemessen werden, wobei das die Rohre durchfließende beheizbare Medium vorzugsweise Siedewasser ist.

9. Vorrichtung nach Anspruch 7 oder 8, **dadurch gekennzeichnet, dass** die Thermoelemente die Temperatur mittels des Seebeck-Effektes messen, wobei die Thermoelemente vorzugsweise Eisen und Konstantan enthalten und besonders bevorzugt aus der eisenhaltigen Membranwand und daran angebrachten Konstantandrähten bestehen, wobei die Konstantandrähte dabei vorzugsweise direkt mit der Membranwand verschweißt sind.

10. Verwendung einer Vorrichtung nach einem der Ansprüche 7 bis 9 oder eines Verfahrens nach einem der Ansprüche 1 bis 6 zur Optimierung der Feuerungsleistungsreglung in Heizkraftwerken, bestehend aus Heizkesseln mit Feuerraum, Strahlungs- und Konvektionszügen, sowie Membranwänden, **dadurch gekennzeichnet, dass** die Temperaturdifferenz an mehreren Stellen der Membranwände gemessen wird, daraus ein Profil der Wärmeflüsse ermittelt wird und

- dieses als Istwert für die Feuerungsleistungsregelung verwendet wird, oder
- nach Vergleich mit einem Profil für die gleichmäßige Wärmeentbindung die Lage des Feuers in dem Verbrennungssystem und die Art und Größe der notwendigen Regelungseingriffe für den Ort und die Menge der Brennstoffzufuhr bestimmt wird und vorzugsweise bei einer Abweichung der Wärmeflussprofile die Art und Größe der Zuteilung des Brennstoffs auf den Rost oder das Brennstoffbette so lange verändert wird, bis die Wärmeflussprofile aus den gemessenen Differenztemperaturen mit den vorgegebenen Wärmeflussprofilen bei gleichmäßiger Wärmeentbindung übereinstimmen.

11. Verwendung einer Vorrichtung nach einem der Ansprüche 7 bis 9 oder eines Verfahrens nach einem der Ansprüche 1 bis 6 zur Optimierung der Feuerungsleistungsreglung in Heizkraftwerken, bestehend aus Heizkesseln mit Feuerraum, Strahlungs- und Konvektionszügen, sowie Membranwänden, **dadurch gekennzeichnet, dass** die Temperaturdifferenz an mehreren Stellen der Membranwände während des Betriebs gemessen wird, und daraus das Profil der Wärmeflüsse ermittelt wird und

- aus diesem Profil entlang des Ausbrandweges der Gase in dem Verbrennungssystem die Art und Größe der notwendigen zugehörigen Regeleingriffe bestimmt wird, und/oder
- aus diesem Profil an den Wänden des Feuerraums die Lage der Ausbrandzone der Feuerungsgase erkannt wird und damit die Art und Größe der notwendigen Luftverteilung der Primär- und Sekundärluft bestimmt wird, und/oder
- aus diesem Profil an den Wänden des Feuerraums die schadhaften Stellen der Feuerfestzustellung sowie der Schutz- und Isolierschichten unmittelbar ermittelt werden, und/oder
- entsprechend des Profils eine Kesselreinigung vorgenommen wird, und/oder
- dieses Profil bei der Bilanzierung des Heizkessels mit Feuerraum, Strahlungs- und Konvektionszügen und ggf. weiterer Anlagenteile in die Ermittlung des Heizwertes des Brennstoffes eingebunden wird.

## Claims

1. Method of measuring the specific heat flow (q) to a membrane wall consisting of webs and pipes, through which pipes there flows a heatable medium, **characterised by** the following steps

a) measuring the temperature difference ($\Delta T$) existing between a web and a pipe by means of at least two thermocouples which are connected via contact points (7, 8) with a web and a pipe,
b) calculating the specific heat flow from the temperature difference between the web and the pipe using the equation q = $\Delta$T.

2. Method according to claim 1, **characterised in that** the thermocouples measure said temperature difference on that side of a boiler which faces away from the flue gas, said boiler being delimited by the membrane wall, wherein, in particular, the pipe is adjacent to the web and the temperatures are preferably measured at the middle of the web and/or preferably at the apex of the pipe, and wherein the medium flowing through the pipes preferably is boiling water.

3. Method according to claim 1 or 2, **characterised in that** for the method there is employed at least one device according to any one of claims 7 to 9, wherein preferably a plurality of such devices measure the temperature differences at a plurality of points of the boiler.

4. Method according to any one of claims 1 to 3, **characterised in that** the thermocouples measure the temperature by using the Seebeck effect, wherein said thermocouples preferably contain iron and constantan, and in particular the base material, which consists of the webs and pipes of the membrane wall, is used as part of the thermocouples, and wherein the thermocouples especially preferably consist of the iron-containing membrane wall and the constantan wires attached thereto, and said constantan wires are preferably welded directly to the membrane wall.

5. Method according to any one of claims 1 to 4, **characterised in that** the heat flow, preferably the heat flow over the operation period between overhauls and thereby the type and magnitude of the thermal resistance, is determined online from the measured data, obtained during operation, on the temperature difference.

6. Method according to any one of claims 1 to 5, **characterised in that**

   - a plurality of temperature differences of membrane walls in the area of the combustion chamber and the radiation flues are measured;
   - a comparison is made between the measured data and the optimal data previously determined;
   - the combustion conditions, such as a change of the fuel composition, of the oxygen supply or of the flue gas velocity, are adjusted; and
   - online cleaning is performed in the radiation flues until the heat flow measured via the temperature difference is equal to the values of the previously determined optimal states.

7. Device for a heat transfer surface disposed downstream of the combustion chamber of a power plant and consisting of pipes for the medium to be heated and webs which are welded to the pipes for the purpose of forming a continuous membrane wall, and containing said membrane wall, **characterised in that** on the membrane wall there are arranged at least two thermocouples in accordance with the method according to any one of claims 1 to 6, at least one of which being connected, via a contact point (7), with a web and at least one of which being connected, via a contact point (8), with a pipe, and that said thermocouples measure the temperature difference existing between the web and the pipe.

8. Device according to claim 7, **characterised in that** the temperatures are measured on that side of a boiler which faces away from the flue gas, said boiler being delimited by the membrane wall, wherein in particular the pipe is adjacent to the web and the temperatures are preferably measured at the middle of the web and/or preferably at the apex of the pipe, and wherein the heatable medium flowing through the pipes preferably is boiling water.

9. Device according to claim 7 or 8, **characterised in that** the thermocouples measure the temperature by using the Seebeck effect, wherein said thermocouples preferably contain iron and constantan and especially preferably consist of the iron-containing membrane wall and the constantan wires attached thereto, said constantan wires preferably being welded directly to the membrane wall.

10. Use of a device according to any one of claims 7 to 9 or of a method according to any one of claims 1 to 6 for optimising the heat input control in combined heat and power stations consisting of boilers with a combustion chamber, radiation flues and convection flues, as well as membrane walls, **characterised in that** the temperature difference is measured at a plurality of points of the membrane walls, that a profile of the heat flows is established therefrom, and that

    - said profile is used as the actual value for the heat input control, or
    - after comparing with a profile for uniform heat release, the position of the fire in the combustion system and the type and magnitude of the required control interventions for the site and the amount of the fuel supply are determined and, in the case of deviation of the heat flow profiles, the type and magnitude of the fuel feed onto the grate or the fuel bed are preferably changed until the heat flow profiles from the measured differential temperatures are equal to the preset heat flow profiles for uniform heat release.

11. Use of a device according to any one of claims 7 to 9 or of a method according to any one of claims 1 to 6 for optimising the heat input control in combined heat and power stations consisting of boilers with a combustion chamber, radiation flues and convection flues, as well as membrane walls, **characterised in that** the temperature difference is measured during operation at a plurality of points of the membrane walls, that a profile of the heat flows is established therefrom, and that

- from said profile along the burnout path of the gases in the combustion system, there are determined the type and magnitude of the necessary associated control interventions, and/or
- from said profile on the walls of the combustion chamber, there is determined the position of the burnout zone of the combustion gases and thereby the type and magnitude of the required distribution of primary air and secondary air, and/or
- from said profile on the walls of the combustion chamber, there are directly determined the defective points in the refractory lining as well as in the protective and insulating layers, and/or
- the boiler is cleaned in accordance with said profile, and/or
- said profile is taken into account when making up the balance for the boiler with combustion chamber, radiation flues and convection flues, and possibly further plant components, in determining the calorific value of the fuel.

**Revendications**

1. Procédé de détection du flux thermique spécifique (q) sur une paroi membrane formée de traverses et de conduits dans lesquels circulent un milieu pouvant être chauffé, **caractérisé par** les étapes a) mesure de la différence de température ($\Delta T$) entre une traverse et un conduit au moyen d'au moins deux éléments thermiques qui sont reliés à une traverse et à un conduit par le biais de points de contact (7, 8), b) calcul du flux thermique spécifique à partir de la différence de température entre la traverse et le conduit en utilisant l'équation $q = \Delta T$.

2. Procédé selon la revendication 1, **caractérisé en ce que** les éléments thermiques mesurent la différence de température sur le côté éloigné des gaz de combustion d'une chaudière limitée par la paroi membrane, le conduit étant notamment contigu à la traverse et les températures étant mesurées de préférence au milieu de la traverse et/ou, de préférence, au niveau de la crête du conduit, le milieu pouvant être chauffé qui circule à travers les conduits étant, de préférence, de l'eau bouillante.

3. Procédé selon la revendication 1 ou 2, **caractérisé en ce que** l'on utilise, pour le procédé, au moins un dispositif selon l'une des revendications 7 à 9, plusieurs de ces dispositifs, de préférence, mesurant les différences de température en plusieurs points de la chaudière.

4. Procédé selon l'une des revendications 1 à 3, **caractérisé en ce que** les éléments thermiques mesurent la température en se basant sur l'effet Seebeck, les éléments thermiques contenant, de préférence, du fer et du constantan et le matériau de base, en particulier, formé des traverses et des conduits de la paroi membrane, faisant notamment partie des éléments thermiques et les éléments thermiques étant formés, particulièrement préférablement, par la paroi membrane ferreuse et des fils de constantan ajoutés à celle-ci, les fils de constantan étant, de préférence, directement soudés à la paroi membrane.

5. Procédé selon l'une des revendications 1 à 4, **caractérisé en ce que** le flux thermique, de préférence le flux thermique pendant le temps de trajet, et donc le type et la grandeur des résistances thermiques, est déterminé pendant le fonctionnement à partir des données de mesure concernant la température différentielle, obtenues en cours d'exploitation.

6. Procédé selon l'une des revendications 1 à 5, **caractérisé en ce que**

- plusieurs différences de température des parois membranes sont mesurées dans la zone du foyer et des parcours de radiation,
- une comparaison des données mesurées et des données optimales déterminées antérieurement est effectuée,
- un réglage des conditions de combustion, telle une modification de la composition du combustible, de l'apport en oxygène ou de la vitesse des gaz de combustion, est réalisé et
- un nettoyage des parcours de radiation étant réalisé pendant le fonctionnement jusqu'à ce que le flux thermique mesuré en utilisant la différence de température coïncide avec les valeurs des états optimaux déterminés antérieurement.

7. Dispositif pour une surface de transmission de la chaleur située en amont du foyer d'une centrale thermique, formée de conduits pour le milieu à chauffer et de traverses qui sont soudées au conduit pour former une paroi membrane ininterrompue, comprenant cette paroi membrane, **caractérisé en ce qu'**au moins deux éléments thermiques selon le procédé selon l'une des revendications 1 à 6 sont situés sur la paroi membrane, éléments dont au moins un est relié à une traverse par le biais d'un point de contact (7) et au moins un est relié à un conduit par le biais d'un point de contact (8), et **en ce que** les éléments thermiques mesurent la différence de température entre la traverse et le conduit.

8. Dispositif selon la revendication 7, **caractérisé en ce que** les températures sont mesurées sur le côté éloigné des gaz de combustion d'une chaudière limitée par la paroi membrane, le conduit, notamment, étant contigu à la traverse et les températures étant, de préférence, mesurées au milieu de la traverse et/ou, de préférence, au niveau de la crête du conduit, le milieu pouvant être chauffé qui circule à travers les conduits étant, de préférence, de l'eau bouillante.

9. Dispositif selon la revendication 7 ou 8, **caractérisé en ce que** les éléments thermiques mesurent la température en se basant sur l'effet Seebeck, les éléments thermiques contenant, de préférence, du fer et du constantan et étant formés, particulièrement préférablement, par la paroi membrane ferreuse et des fils de constantan ajoutés à celle-ci, les fils de constantan étant, de préférence, directement soudés à la paroi membrane.

10. Utilisation d'un dispositif selon l'une des revendications 7 à 9 ou d'un procédé selon l'une des revendications 1 à 6 pour optimiser le réglage de la puissance de chauffage des centrales thermiques comprenant des chaudières avec un foyer, des parcours de radiation et de convection et des parois membranes, **caractérisée en ce que** la différence de température est mesurée en plusieurs points des parois membranes, un profil des flux thermiques est déterminé à partir de cette mesure et

- ce profil est utilisé comme valeur effective pour le réglage de la puissance de chauffage ou,
- après comparaison avec un profil requis pour l'émission uniforme de la chaleur, la position du foyer dans le système de combustion est déterminée, ainsi que le type et l'ampleur des réglages nécessaires concernant le lieu et la quantité d'alimentation en combustible et, de préférence, en cas d'écart entre les profils de flux thermiques, le type et la quantité de combustible à charger sur la grille ou le banc à combustible sont modifiés jusqu'à ce que les profils de flux thermiques obtenus à partir des températures différentielles mesurées coïncident avec les profils de flux thermiques prédéfinis correspondant à une émission constante de chaleur.

11. Utilisation d'un dispositif selon l'une des revendications 7 à 9, ou d'un procédé selon l'une des revendications 1 à 6 pour optimiser le réglage de la puissance de chauffage des centrales thermiques comprenant des chaudières avec un foyer, des parcours de radiation et de convection et des parois membranes, **caractérisée en ce que** la différence de température est mesurée en plusieurs points des parois membranes pendant l'exploitation et le profil des flux thermiques est déterminé à partir de cette mesure et

- partant de ce profil le long du parcours de combustion des gaz dans le système de combustion, on détermine le type et l'ampleur des réglages correspondants nécessaires et/ou
- partant de ce profil au niveau des parois du foyer, la position de la zone de combustion des gaz de chauffage est détectée et on détermine ainsi le type d'air et les quantités d'air primaire et secondaire nécessaires pour la répartition d'air et/ou
- partant de ce profil haut niveau des parois du foyer, on détermine directement les endroits endommagés du revêtement réfractaire, ainsi que des couches de protection et d'isolation et/ou
- un nettoyage de la chaudière est entrepris en fonction du profil et/ou
- ce profil est utilisé dans la détermination du pouvoir calorifique du combustible au moment de la réalisation du bilan de la chaudière, avec son foyer, ses parcours de radiation et de combustion et, le cas échéant, d'autres parties de l'installation.

Fig. 1

Temperaturen in der Membranwand mit 30 mm SIC90 Masse und Isolation bei 50 kW/m² sowie 300 °C Siedewasser

Fig. 2

Temperaturen auf der Achse der Außenseite des Steges einer Membranwand in Abhängigkeit vom spezifischen Wärmefluss "q" und der Rohrteilung "T" bei 300 °C Siedewasser

Fig. 3

Fig. 4

Fig. 5

Fig. 6: Kesselkontur mit vollständiger Bestückung der Wärmeflussmessungen, die im Anspruch 4, 10, 11 und 12 genannt und genutzt werden.

**Fig.6a:** Ausschnitt aus Abbildung 6 Wärmeflussmessungen zur Bestimmung der Lage des Brennstoffes vor dem Zuteiler über Rostzone 1, Anspruch 6.

Fig. 6b: Ausschnitt aus Abbildung 6 Wärmeflussmessungen zur Bestimmung der Lage des Feuers in dem Verbrennungssystem, Anspruch 5.

**Fig. 6c:** Ausschnitt aus Abbildung 6 Wärmeflussmessungen zur Bestimmung der Lage des Feuers in der Ausbrandzone, Anspruch 8

Fig. 6d: Ausschnitt aus Abbildung 6 Wärmeflussmessungen zur Bestimmung des Zustandes der Feuerfestzustellung, Anspruch 9

**Fig. 6e:** Auschnitt aus Abbildung 6 Wärmeflussmessungen zur Bestimmung der Thermik in den Strahlungszügen, Anspruch 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004036116 A2
- US 6485174 B1
- US 4779994 A